# EUROPEAN PATENT APPLICATION

(11) **EP 4 470 899 A1**
(43) Date of publication of application: **04.12.2024**
(21) Application number: 22710421.3
(22) Date of filing: 28.01.2022
(51) Int. Cl.: B63B 1/10, B63B 1/12, B63B 5/14, B63B 75/00, F03D 13/25

(54) **SEMI-SUBMERSIBLE PLATFORM**

(71) Applicant: Acciona Construcción, S.A., 28108 Alcobendas (ES); Bluenewables S.L., 38689 Guía de Isora (ES)
(72) Inventor: PAULOTO, Carlo, 28108 Alcobendas (Madrid) (ES); NAVARRO LERA, Enrique, 28108 Alcobendas (Madrid) (ES); FERNANDEZ BEJARANO, Jose Luis, 28108 Alcobendas (Madrid) (ES); MOYA GUINDO, Luis, 28108 Alcobendas (Madrid) (ES); COUÑAGO LORENZO, Bernardino, 38689 Guia de Isora, Tenerife (ES); HERNÁNDEZ BLANCO, Sergio, 38689 Guia de Isora, Tenerife (ES); SAINZ AVILA, Oscar, 38689 Guia de Isora, Tenerife (ES); BARAHONA OVIEDO, Cecilio, 38689 Guia de Isora, Tenerife (ES); FERNANDEZ GIL, Ismael, 38689 Guia de Isora, Tenerife (ES); GARCIA GARCIA, Diego, 38689 Guia de Isora, Tenerife (ES)
(74) Representative: Pons
(86) International application number: PCT/ES2022/070046
(87) International publication number: WO 2023/144425

(57) **Abstract**

The present invention relates to a semi-submersible platform (1) for maritime applications such as wind power, electrical substations or hydrogen generation plants, wherein the semi-submersible platform (1) comprises a base body (2) made of concrete equipped with internal compartments (3) adapted to house ballast water, and three or more buoyancy columns (4) substantially made of concrete, wherein said columns (4) protrude from an upper face of the base body (2) and are arranged at the vertexes of the base body (2), wherein at least one column (4) is internally equipped with respective concentric rings (5, 6), an inner ring (5) and an outer ring (6), joined together by a plurality of radial walls (7) that define anti-flood compartments (8).

## Description

### OBJECT OF THE INVENTION

The present invention falls within the technical field of semi-submersible platforms for maritime applications. More particularly, the object of the present invention is a semi-submersible platform substantially made of concrete with a passive anti-flood system materialised by means of buoyancy columns with a certain internal compartmentalisation, wherein said platform can be used for various maritime applications such as wind power, electrical substations or hydrogen generation facilities.

### BACKGROUND OF THE INVENTION

In the state of the art there are many systems for laying the foundations and stabilising maritime platforms.

Depending on the type of foundation used, they can be classified as floating, semi-submersible or gravity foundations.

In floating systems, mounting can be carried out on land by moving the entire assembly to the installation point or at the installation point itself by moving the foundation and the tower independently.

As for semi-submersed platform systems, most of the known installations consist of steel elements joined together forming a lattice structure.

These lattice systems have greater mounting complexity, as well as possible corrosion problems, particularly in the joints between elements.

Likewise, the manufacturing cost of these lattice structures is significantly higher than in the case of floating structures made of concrete.

Likewise, known systems can have an active or passive ballast system. For example, the active system may consist of pumping ballast fluid, for example ballast water, between the inside of the buoyancy columns and compartments of the main body depending on the loads transmitted by the wind turbine and the waves.

Other passive systems use ballast water inside the columns only to carry out the controlled sinking to the desired height below the sea surface at the time of installation.

A problem with some known systems is that, in the event of an unexpected leak in one of the buoyancy columns, the entire column will be imminently flooded, and, as a result, the entire semi-submersible platform may sink. More particularly, a progressive and unstoppable flood can lead to uncontrollable heeling, and thus cause the platform to sink.

Other known platforms, in addition to the buoyancy columns, use a central support at the centre of the base body for the installation of the wind turbine, this being expensive and complex.

### DESCRIPTION OF THE INVENTION

The present invention aims to solve some of the problems mentioned in the state of the art. More particularly, in a first aspect of the invention, a semi-submersible platform for maritime applications is described.

Said semi-submersible platform comprises:
- a base body made of concrete equipped with internal compartments adapted to house a ballast fluid,
- three or more buoyancy columns substantially made of concrete, wherein said columns protrude from an upper face of the base body and are arranged at the vertexes of the base body, wherein at least one column is internally equipped with respective concentric rings, an inner ring and an outer ring, joined together by a plurality of radial walls that extend along the entire column and define anti-flood compartments.

The internal configuration of the proposed column makes it possible to prevent an unexpected leak inside the column from triggering a progressive and unstoppable flood that leads to uncontrollable heeling, and with it, the sinking of the platform. Simultaneously, it also has a structural function for load transmission, particularly if a wind turbine is coupled to one of the buoyancy columns.

In a preferred embodiment, all the columns comprise an inner ring and an outer ring, joined together by a plurality of radial walls that define anti-flood compartments.

One of the columns, hereinafter called the main column, can be operatively joined to a metal tower, for example, of a wind turbine.

More particularly, in a preferred embodiment, the metal tower can be coupled to the inner ring of the main column through an anchor ring.

As a result, the radial walls not only fulfil an anti-flood function but also improve the distribution of loads from the wind turbine to the column and from this column to the platform.

Preferably, the main column comprises more radial walls than the rest of the columns.

Columns can be cylinder-shaped structures that provide stability by adding inertia in the water plane (increasing the metacentric radius). Additionally, a cylindrical configuration reduces wave loads.

However, the columns could have a rectangular, hexagonal or equivalent configuration. In said embodiments, the metal tower is coupled in the same manner to an inner ring of a main column as mentioned above.

In addition, the semi-submersible platform comprises a lower slab that acts as a support for the columns, the radial walls, and for the base body and compartments of the base body. This lower slab is intended to provide greater structural rigidity to the entire platform, acting as a support element during the construction process of the rest of the platform elements.

This lower slab can protrude along the perimeter from the base body, providing a larger ground area than that available in the case of the base body, helping to lower the centre of gravity of the whole, and providing a hydrodynamic improvement to the whole structure, with a possible extra increase in mass and shock absorbing during the different phases of transport, launching and operation.

Likewise, the base body can have a central opening forming a lunar pool at the centre thereof, which enables the use of materials and their associated cost to be reduced.

In a preferred embodiment, the base body has a rectangular configuration with four buoyancy columns arranged at each vertex thereof. However, the base body could have a substantially triangular configuration with three columns, a hexagon or a pentagon with the buoyancy columns arranged at the vertexes of the base body.

The platform may also have mooring lines joined to each column and intended to be operatively joined to the seabed. Preferably, it comprises four mooring lines coupled to four buoyancy columns.

In other embodiments, the semi-submersible platform can be used for other maritime applications such as for a marine electrical substation or for marine hydrogen generation facilities. Note that it can be used for any other type of offshore application.

The equipment required in each case can be arranged within at least one of the buoyancy columns and/or supported by a support surface which is in turn supported by the buoyancy columns.

In a second aspect, the object of the invention is a maritime wind installation comprising the submersible platform according to any of the embodiments described above, and further comprising a metal tower joined to one of the buoyancy columns and a wind turbine mounted on said metal tower and equipped with at least two blades, a nacelle, a hub and an electric generator.

A third aspect of the invention relates to a method of transportation and installation of the submersible platform, comprising:
a.) coupling a metal tower to one of the buoyancy columns, or coupling a piece of equipment of maritime application inside one of the columns and/or on a support surface supported by the columns,
b.) equipping one or more columns with respective concentric rings (5, 6), joined together by a plurality of radial walls that define anti-flood compartments,
c.) transporting the assembly over the ocean in a self-supporting (floating) manner to an installation point located at sea,
d.) filling the internal compartments of the main body with a ballast fluid, so that the controlled sinking of the platform to a predetermined height of the columns occurs, thus leaving the base body below the surface of the sea,
e.) coupling the mooring lines to each of the buoyancy columns.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a perspective view of a preferred embodiment of the invention wherein the base body, the lower slab, the buoyancy columns, concentric rings and a metal tower mounted on the inner ring of the main column are illustrated.
Figure 2 shows an upper cross-sectional view of the embodiment of Figure 1, wherein the compartments of the main body, the lunar pool and the anti-flood compartments are illustrated.
Figure 3 shows a detailed view of the main column according to the invention showing the coupling of a mooring line thereto.
Figure 4 shows a plan view of an installation according to the present invention, comprising a metal tower mounted on the inner ring of the main buoyancy column and a wind turbine mounted on said metal tower.
Figure 5 shows a view of the installation of Figure 4, wherein the mooring lines coupled to each column and to the seabed are more clearly illustrated.

### PREFERRED EMBODIMENT OF THE INVENTION

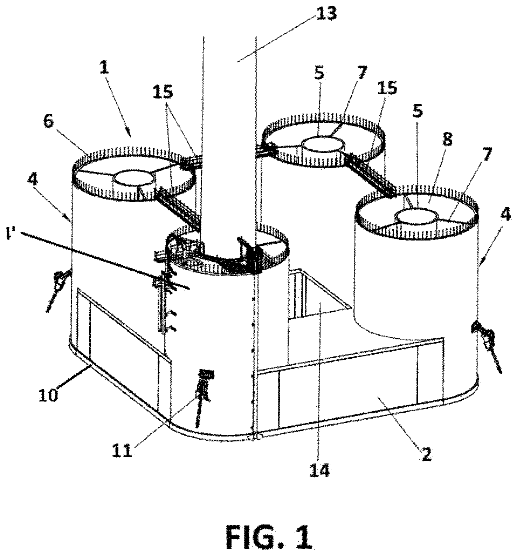

A detailed description of a preferred exemplary embodiment of the semi-submersible platform, the installation and the method of installation and transport object of the present invention is provided below, with the aid of the attached Figures 1-5 described above.

More particularly, as can be seen in Figure 1, a first object of the invention is a semi-submersible platform (1) for maritime applications, comprising a base body (2) made of concrete equipped with internal compartments (3) adapted to house ballast water, and three or more buoyancy columns (4) substantially made of concrete, wherein said columns (4) protrude from an upper face of the base body (2) and are arranged at the vertexes of the base body (2), and wherein at least one column (4) is internally equipped with respective concentric rings (5, 6), an inner ring (5) and an outer ring (6), joined together by a plurality of radial walls (7) that define anti-flood compartments (8).

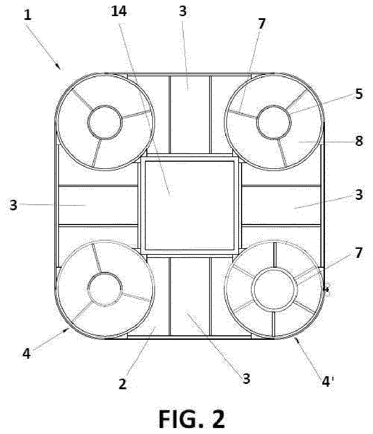

Figures 1 and 2 show that, in the preferred embodiment being described, all the columns (4) comprise an inner ring (5) and an outer ring (6), joined together by a plurality of radial walls (7) that define anti-flood compartments (8).

As shown in Figure 1, in the preferred embodiment a metal tower (13) is coupled to the inner ring (5) of the main column (4') through an anchor ring.

Figure 2 shows more clearly that the main column (4') comprises more radial walls (7) than the rest of the columns (4).

Likewise, Figure 1 illustrates that the semi-submersible platform (1) comprises a lower slab (10) made of concrete joined to a lower face of the base body (2), wherein said lower slab (10) protrudes along the perimeter from the base body (2).

As shown in Figures 1 and 2, the base body (2) is equipped with a central opening (14) that defines a lunar pool at the centre thereof.

In the preferred embodiment described by all Figures 1-5, the base body (2) has a rectangular configuration with four buoyancy columns (4) arranged at each vertex thereof.

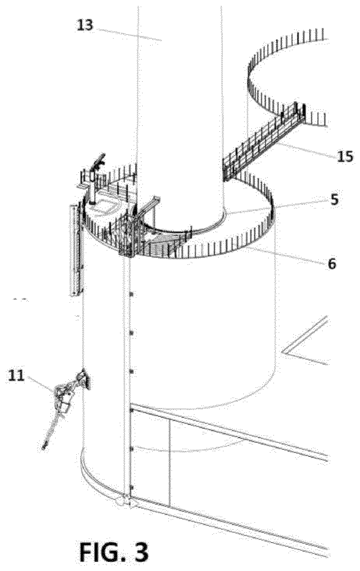

Figure 3 shows a detailed view of the main column (4') according to the present invention showing the system for coupling a mooring line (11) thereto.

In the preferred embodiment described, each buoyancy column (4) has mooring lines (11) operatively joined to each column (4) and intended to be joined to the seabed.

In addition, as shown in Figure 3, the buoyancy columns (4) can have an access walkway (15) for operators, wherein said access walkway (15) joins two buoyancy columns (4) together by an upper portion thereof.

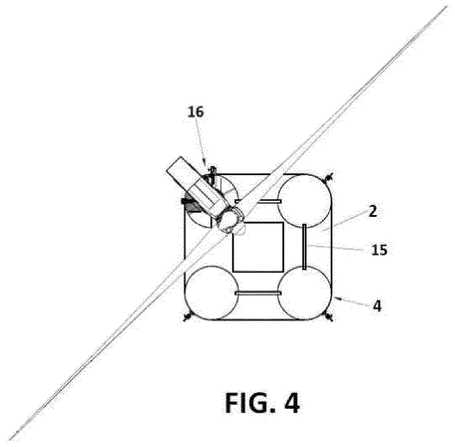

Figure 4 illustrates a preferred embodiment of the semi-submersible installation object of the present invention, wherein said installation comprises the submersible platform (1) described by the previous figures, and further comprises a metal tower (12) joined to one of the buoyancy columns (4) and a wind turbine (13) mounted on said metal tower (12), wherein the wind turbine (16) in turn comprises at least two blades, a nacelle, a hub and an electric generator.

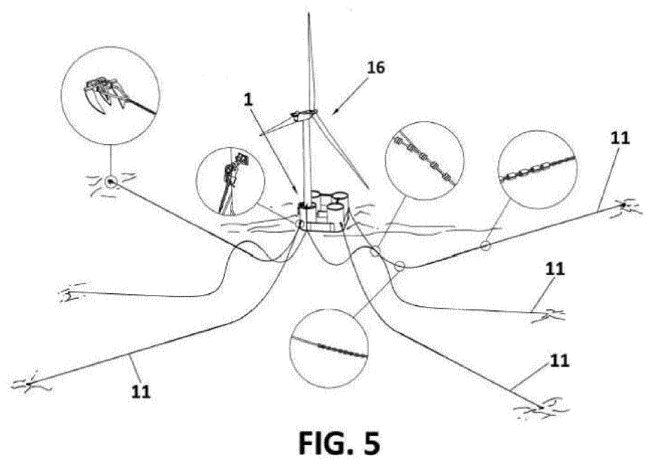

Figure 5 illustrates the preferred embodiment described above, wherein the semi-submersible platform (1) is shown already ballasted and in offshore operation configuration, with the wind turbine (16) mounted on the metal tower (13) which is in turn coupled on the inner ring (5) of the main column (4').

Likewise, Figure 5 illustrates the mooring lines (11) joined to each of the buoyancy columns (4) and to the seabed.

The present invention also describes a method of transportation and installation of the semi-submersible platform (1) described above, comprising the following steps:
a.) coupling a metal tower (13) to one of the buoyancy columns (4), or coupling a piece of equipment of maritime application inside one of the columns (4) and/or on a support surface supported by the columns (4),
b.) equipping one or more columns (4) with respective concentric rings (5, 6), joined together by a plurality of radial walls (7) that define anti-flood compartments (8),
c.) transporting the assembly over the ocean in a self-supporting (floating) manner to an installation point located at sea,
d.) filling the internal compartments (3) with a ballast fluid, so that the controlled sinking to a predetermined height of the columns occurs, thus leaving the base body (2) below the surface of the sea,
e.) coupling the mooring lines (11) to each of the buoyancy columns (4).

The equipment of maritime application mentioned above may comprise the elements and devices required, for example, for a marine electrical substation or for an offshore hydrogen generation plant.

## Claims

1. A semi-submersible platform (1) for maritime applications, comprising:
- a base body (2) made of concrete equipped with internal compartments (3) adapted to house ballast water,
- three or more buoyancy columns (4) substantially made of concrete, wherein said columns (4) protrude from an upper face of the base body (2) and are arranged at the vertexes of the base body (2), and wherein the platform (1) is **characterised in that** at least one column (4) is internally equipped with respective concentric rings (5,6), an inner ring (5) and an outer ring (6), joined together by a plurality of radial walls (7) that define anti-flood compartments (8).

2. The semi-submersible platform (1) of claim 1, wherein all the columns (4) comprise an inner ring (5) and an outer ring (6), joined together by a plurality of radial walls (7) that define anti-flood compartments (8).

3. The semi-submersible platform (1) of claim 2, wherein one of the columns (4) is a main column (4') that is operatively joined to a metal tower (13).

4. The semi-submersible platform (1) of claim 3, wherein the metal tower (13) is coupled to the inner ring (5) of the main column (4') through an anchor ring.

5. The semi-submersible platform (1) of claim 3, wherein the main column (4') comprises more radial walls (7) than the rest of the columns (4).

6. The semi-submersible platform (1) of claim 1, further comprising a lower slab (10) made of concrete joined to a lower face of the base body (2).

7. The platform of claim 6, wherein the lower slab (10) protrudes along the perimeter from the base body (2).

8. The semi-submersible platform (1) of claim 1, wherein the base body (2) has a central opening (14) defining a lunar pool at the centre thereof.

9. The semi-submersible platform (1) of claim 1, wherein the base body (2) has a rectangular configuration with four buoyancy columns (4) arranged at each vertex thereof.

10. The semi-submersible platform (1) of claim 1, further comprising mooring lines (11) operatively joined to each column (4) and intended to be joined to the seabed.

11. The semi-submersible platform (1) of claim 1, further comprising a piece of equipment of maritime application inside at least one of the buoyancy columns (4) and/or supported by means of a support surface that is in turn joined and supported by the buoyancy columns (4).

12. The semi-submersible platform (1) of claim 11, wherein the piece of equipment of maritime application is a maritime electrical substation.

13. The semi-submersible platform (1) of claim 11, wherein the piece of equipment of maritime application is a hydrogen generation facility.

14. A maritime wind installation comprising the submersible platform (1) according to any one of the preceding claims, and further comprising a metal tower (12) joined to one of the buoyancy columns (4) and a wind turbine (13) mounted on said metal tower (12), wherein said wind turbine (16) in turn comprises at least two blades, a nacelle, a hub and an electric generator.

15. A method of transportation and installation of the submersible platform (1) according to any one of claims 1-13, comprising:
a.) coupling a metal tower to one of the buoyancy columns (4), or coupling a piece of equipment of maritime application inside one of the columns (4) and/or on a support surface supported by the columns (4),
b.) equipping one or more columns (4) with respective concentric rings (5, 6), joined together by a plurality of radial walls (7) that define anti-flood compartments (8),
c.) transporting the assembly over the ocean in a self-supporting manner to an installation point located at sea,
d.) filling the internal compartments (3) with a ballast fluid, so that the controlled sinking to a predetermined height of the columns occurs, thus leaving the base body (2) below the surface of the sea,
e.) coupling the mooring lines (11) to each of the buoyancy columns (4).

## Amended claims

### Amended claims under Art. 19.1 PCT

1. A semi-submersible platform (1) for maritime applications, comprising:
- a base body (2) made of concrete and having a rectangular configuration, and equipped with internal compartments (3) adapted to house ballast water,
- four buoyancy columns (4) substantially made of concrete, wherein said columns (4) protrude from an upper face of the base body (2) and are arranged at the vertexes of the base body (2), and wherein the platform (1) is **characterised in that** all buoyancy columns (4) are internally equipped with respective concentric rings (5,6), an inner ring (5) and an outer ring (6), joined together by a plurality of radial walls (7) that define anti-flood compartments (8), wherein one of the buoyancy columns (4) is a main column (4') that is operatively joined to a metal tower (13) intended to support a wind turbine (13), and wherein said main column (4') comprises more radial walls (7) than the rest of the columns (4).

2. The semi-submersible platform (1) of claim 1, wherein the metal tower (13) is coupled to the inner ring (5) of the main column (4') through an anchor ring.

3. The semi-submersible platform (1) of claim 1, further comprising a lower slab (10) made of concrete joined to a lower face of the base body (2).

4. The platform of claim 3, wherein the lower slab (10) protrudes along the perimeter from the base body (2).

5. The semi-submersible platform (1) of claim 1, wherein the base body (2) has a central opening (14) defining a lunar pool at the centre thereof.

6. The semi-submersible platform (1) of claim 1, further comprising mooring lines (11) operatively joined to each column (4) and intended to be joined to the seabed.

7. The semi-submersible platform (1) of claim 1, further comprising a piece of equipment of maritime application inside at least one of the buoyancy columns (4).

8. The semi-submersible platform (1) of claim 7, wherein the piece of equipment of maritime application is a hydrogen generation facility.

9. A maritime wind installation comprising the submersible platform (1) according to any one of the preceding claims, and further comprising a wind turbine (13) mounted on the metal tower (12) in the main column (4'), wherein said wind turbine (16) in turn comprises at least two blades, a nacelle, a hub and an electric generator.

10. A method of transportation and installation of the submersible platform (1) according to any one of claims 1-9, comprising:
a.) coupling a metal tower to the ring of the main column (4') at one of the vertexes of the rectangular base body (2),
b.) transporting the assembly over the ocean in a self-supporting manner to an installation point located at sea,
c.) filling the internal compartments (3) with a ballast fluid, so that the controlled sinking to a predetermined height of the columns occurs, thus leaving the base body (2) below the surface of the sea,
d.) coupling the mooring lines (11) to each of the buoyancy columns (4).
